# EUROPEAN PATENT SPECIFICATION

(11) **EP 2 096 321 B1**
(45) Date of publication and mention of the grant of the patent: **22.03.2017**
(21) Application number: 07851000.5
(22) Date of filing: 20.12.2007
(51) Int. Cl.: F04D 29/52, F04D 29/54, F04D 29/66

(54) **COMPRESSOR**
VERDICHTER
COMPRESSEUR

(30) Priority: 21.12.2006 JP 2006343814
(43) Date of publication of application: 02.09.2009
(73) Proprietor: Mitsubishi Hitachi Power Systems, Ltd., Yokohama 220-8401 (JP)
(72) Inventor: NAGAI, Naonori, Takasago-shi Hyogo 676-8686 (JP); SATO, Kenji, Takasago-shi Hyogo 676-8686 (JP)
(74) Representative: Henkel, Breuer & Partner
(86) International application number: PCT/JP2007/074575
(87) International publication number: WO 2008/075747

(56) References cited:
- WO-A1-2005/119028
- JP-A- 06 146 922
- JP-A- 57 176 400
- JP-A- 2000 145 699
- JP-A- 2006 037 877
- JP-B1- 49 024 005
- JP-U- 07 017 994
- US-A1- 2006 257 252

## Description

### [TECHNICAL FIELD]

The present invention relates to a compressor that compresses air.

### [BACKGROUND ART]

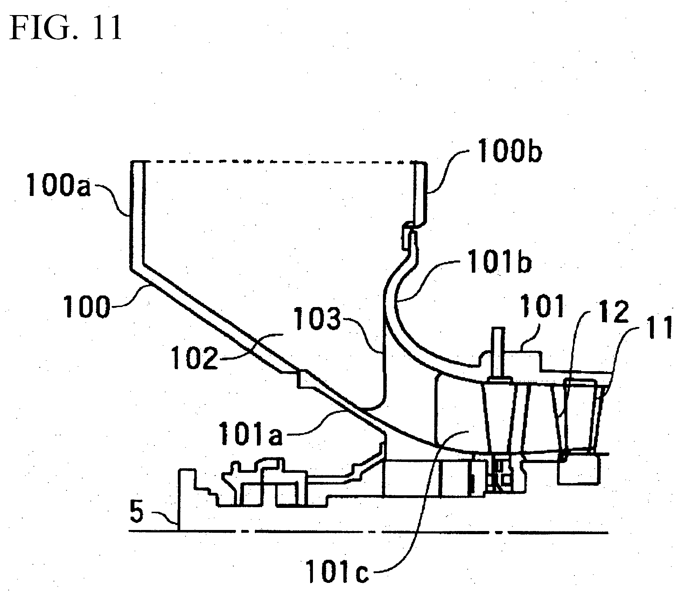

Conventionally, combustion gas for rotating a turbine in a gas turbine is generated by a combustor combusting fuel gas with compressed air that is compressed with a compressor. An intake duct that draws in air from the open air is installed at the inlet of the compressor that generates this compressed air. As shown in the cross-sectional view of FIG 11, an intake duct 100 is formed to have a single suction structure with the upper side being opened so as to draw in the open air along with having a ring shape at the periphery of a rotor shaft 5 at the distal end of the rotor shaft 5 at which a rotor blade 12 of a compressor 101 is installed.

In the intake duct 100, an intake casing 100a on the side of the rotor shaft 5 connects with an inner casing 101 a that covers the periphery of the rotor shaft 5, and an outer side intake casing 100b connects with an outer casing 101b that is disposed on the outer periphery of the inner casing 101 a. Note that an annular space that is enclosed by the inner casing 101a and the outer casing 101b serves as an air flow path 101c, and a stator blade 11 and the rotor blade 12 are alternately arranged. Then, air that has been drawn in through the intake duct 100 is compressed by rotation of the rotor blade 12 via the rotor shaft 5.

In the case of a single suction structure that draws in air from a direction perpendicular to the rotor shaft as in the intake duct 100 shown in FIG 11, in the annular space 102 that is constituted by the intake casings 100a, 100b, the inner casing 101a, and the outer casing 101b, the air that is drawn in from the circumferential direction of the rotor shaft 5 is distributed in the circumferential direction of the annular flow path. Then, that air that has been distributed in the circumferential direction in this annular space 102 flows into an air flow path 101c that is constituted by the inner casing 101a and the outer casing 101b. In this way, when flowing from the space 102 into the air flow path 101c, in order to make that flow smooth, a bell mouth shape is formed in which the distal end of the intake casing 100b and the outer casing 101b are curved in the outer peripheral direction, and this curved portion 101d is swelled toward the inner wall of the intake casing 100a. The intake casing 100b is connected to the distal end of the curved portion 101d of the outer casing 101b.

In this way, the intake duct 100 is constituted by the intake casings 100a, 100b, the inner casing 101a, and the outer casing 101b, but the inner casing 101a is constituted by being extended further toward the distal end of the rotor shaft 5 than the outer casing 101b. And, in order to support the inner casing 101a and the outer casing 101b, a plurality of struts 103 are provided in a radial pattern centered on the rotor shaft 5. Conventionally, these plurality of struts 103 have always been disposed at an equal spacings with respect to the circumferential direction of the rotor shaft 5 as shown in FIG. 12 (refer to JP H07-17994, page 4 and Figs. 4, 5).

WO 2005 119028A discloses a gas turbine compression system that forms part of a gas turbine engine. A plurality of struts are provided within the flow channel between the respective stages of the compressor which are not only structural struts connecting the inner and outer components of the casing but simultaneously have an aerodynamic function in that they are provided with a cambered airfoil shape for turning the gas flow in a particular direction between the stator and rotor blades.

JP S57-176400A, on which the preamble portion of the new claim 1 is based, discloses a gas turbine which has a suction part of a compressor section formed as an integral structure of inner and outer portions of a casing defining the air inlet without any supporting struts. The suction part further has an annular mouth ring curved to a bell shape for taking in air. A slit is provided on the mouth ring to provide a communication between an upstream area of an air inlet with high static pressure and a downstream curved part of the suction part. As a result, an exfoliation in the curved part can be avoided and a loss in the suction part may be reduced.

### [DISCLOSURE OF THE INVENTION]

### [PROBLEM TO BE SOLVED BY THE INVENTION]

In the case of the intake duct 100 being constituted as shown in FIG 11, it is constituted as the single suction structure that draws in open air from a direction perpendicular to the rotor shaft 5. Accordingly, since the air that is distributed in the circumferential direction of the rotor shaft 5 in the annular space 102 does not have a balanced flow rate with respect to the flow path area in the circumferential direction, a drift in the circumferential direction exists in the flow of that air.

Therefore, when air flows into the air flow path 101c of the compressor 101, a condition of un-uniform inflow in the circumferential direction arises, which may cause a decline in the stall margin as well as lead to a rotating stall during starting and velocity increasing of the compressor 101. Moreover, since the inflow condition of air into the air flow path 101c of the compressor 101 is un-uniform in the circumferential direction, locations arise in which the angle of elevation with respect to the struts 103 becomes large. As a result, at the places where the angle of attack is large, a separation at the struts 103 arises, and the profile loss increases.

Also, as shown in FIG. 11, forming the curved portion 101d near the connection portion between the intake casing 100b and the outer casing 101b into a smooth bell mouth shape accelerates the flow of air that flows along the wall surface formed by the intake casing 100b and the outer casing 101b. As a result, the flow that flows into the struts 103 has a three-dimensional drift that is distributed in the span direction as well. In particular, in the strut periphery, the profile loss increases at locations where the flow of air becomes fast. This is because the profile loss is proportional to the square of the velocity.

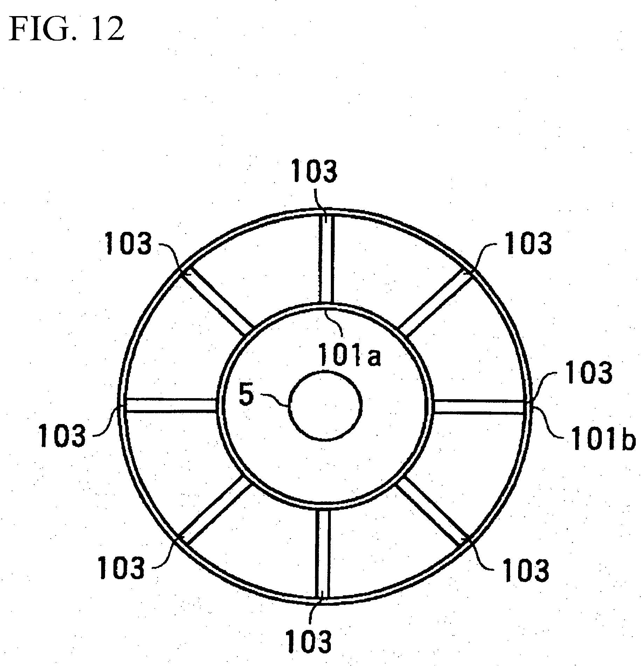

Furthermore, as shown in FIG. 12, in the case of providing struts 103 at an equal spacings with respect to the circumferential direction of the rotor shaft 5, based on the influence of the wake (region of slow flow velocity) that occurs at the rear end of the struts 103, the harmonic component of the exciting force that corresponds to the number of struts 103 becomes large. For that reason, when designing the stator blade 11 and the rotor blade 12 of the compressor 101, it is necessary to produce a detuned design that does not resonate with the harmonic component due to the struts 103.

In this way, due to the arrangement relation between the single suction structure of an intake duct and the struts, the inflow condition of air that is drawn into the compressor becomes un-uniform, and the pressure loss due to the struts increases, leading to a drop in the compressor efficiency. Also, the degree of freedom in the blade design of the compressor is also restricted by the harmonic component of the exciting force that is generated by arranging the struts in equal spacings in the circumferential direction.

The present invention was achieved in view of the above circumstances, and has as its object to provide a compressor having a high degree of freedom of blade design and having a high compression efficiency.

### [MEANS FOR SOLVING THE PROBLEM]

In order achieve the aforementioned object, a compressor of the present invention comprises the features of claim 1.

In the intake duct of the compressor of the present invention, n struts may be arranged in the circumferential direction of the rotor shaft (n being an integer of 2 or more) and the difference between the maximum value and the minimum value of the angle expressing the spacings of the adjacent struts when centered on the rotor shaft may be at least 120 degrees/n.

The intake duct of the compressor of the present invention may be further provided with a first casing that is connected to the inner casing at the entrance end of the fluid flow path, and a second casing that is connected to the outer casing at the entrance end of the fluid flow path; in which a curved portion that curves so as to project toward the first casing may be formed at the connection portion of the outer casing with the second casing.

In the intake duct of the compressor of the present invention, the curved portion may have: a flat portion that is adjacent to the second casing and consists of a surface that is approximately parallel with the peripheral surface of the rotor shaft; and a curved surface that smoothly curves inward in the radial direction of the rotor shaft from the distal end of the flat portion, in which a cross-section of the curved portion may form an approximate U-shape that projects toward the first casing.

In the intake duct of the compressor of the present invention, the connection portions of the struts with the outer casing may be positioned further to the downstream in the axial direction of the rotor shaft than the distal end of the curved portion.

In the intake duct of the compressor of the present invention, in the flat portion that is formed in an annular shape along the circumferential direction of the rotor shaft, the length in the axial direction of a portion adjacent to an open air suction port that is formed at the distal end of the first casing and the second casing may be longer than the length in the axial direction of another portion that is positioned further from the suction port than the portion.

In the intake duct of the compressor of the present invention, in the curved portion that is formed in an annular shape along the circumferential direction of the rotor shaft, the distal end of a portion that is adjacent to an open air suction port that is formed at the distal end of the first casing and the second casing may project further toward the first casing than the distal end of another portion that is positioned further from the suction port than the portion.

In the intake duct of the compressor of the present invention, the connection portions of the struts with the outer casing may be positioned further downstream in the axial direction of the rotor shaft than the connection portions of the struts with the inner casing.

In the intake duct of the compressor of the present invention, the distance in the axial direction of the connection portion between the struts with the outer casing and the distance in the axial direction of the connection portion between the struts with the inner casing may be longer the closer the struts are to the suction port.

### [EFFECT OF THE INVENTION]

According to the present invention, for the struts that are arranged in a radial pattern centered on the rotor shaft, the spacings between the struts in the circumferential direction of the rotor shaft are unequal. Accordingly, it is possible to reduce the harmonic component that occurs in the case of the struts being arranged at equal spacings as before. That is, within the compressor, it is possible to distribute the exciting force at each frequency in a frequency distribution of fluids that flow to the downstream of the struts. By doing so, since it is possible to reduce the harmonic component that has occurred in a conventional shape, it is possible to increase the degree of freedom of blade design in the compressor.

Also, by providing the flat portion that consists of a surface that is approximately parallel with the peripheral surface of the rotor shaft at the curved portion in the connection portion of the second casing and the outer casing, it is possible to stop the flow of fluid that flows from the periphery of the inner wall of the second casing. Thereby, it is possible to flow the fluid in the circumferential direction of the rotor shaft along this flat portion, and it is possible to make the flow of the fluid that flows from the distal end of the curved portion nearly the same condition in the circumferential direction of the rotor shaft. Thereby it is possible to reduce drifts in flow supplied to the compressor and possible to suppress a drop in efficiency of the compressor.

Furthermore, as a result of the connection position of the struts with the outer casing becoming a removed position with respect to the connection portion of the second casing and the outer casing, it is possible to make the flow of fluid that flows into periphery in the radial direction of the rotor shaft with respect to the struts more uniform. Thereby, since it is possible to reduce the pressure loss at the periphery with respect to the radial direction of the rotor shaft in the struts, it is possible to suppress a drop in efficiency of the compressor.

### [BRIEF DESCRIPTION OF THE DRAWINGS]

FIG 1 is an outline sectional view that shows a constitution of a gas turbine provided with an intake duct of the present invention.
FIG. 2 is an outline sectional view around an intake duct showing a constitution of an intake duct of a first embodiment.
FIG. 3 shows an arrangement relationship of struts in the intake duct of the first embodiment.
FIG. 4 shows the distribution characteristics of the frequency component in the case of the struts being disposed at equal spacings and in the case of being disposed at unequal spacings.
FIG. 5 is a drawing that shows another example of the arrangement relationship of struts in the intake duct of the first embodiment.
FIG. 6 is an outline sectional view around an intake duct showing the constitution of an intake duct of a second embodiment.
FIG. 7 is an outline sectional view around an intake duct showing another constitution of the intake duct of the second embodiment.
FIG 8 explains the positional relationship of the strut and the rotor shaft.
FIG. 9 is an outline sectional view around the intake duct showing the constitution of an intake duct of a third embodiment.
FIG. 10 is an outline sectional view around an intake duct showing another constitution of the intake duct of the third embodiment.
FIG. 11 is an outline sectional view around the intake duct showing the constitution of a conventional intake duct.
FIG. 12 shows the arrangement relationship of struts in the convention intake duct.

### [BRIEF DESCRIPTION OF THE REFERENCE NUMERALS]

1 compressor; 2 combustor; 3 turbine; 4a inner casing; 4b outer casing; 5 rotor shaft; 6a intake casing (first casing); 6b intake casing (second casing); 7 suction port; 8 strut

### [BEST MODE FOR CARRYING OUT THE INVENTION]

### (Constitution of Gas Turbine)

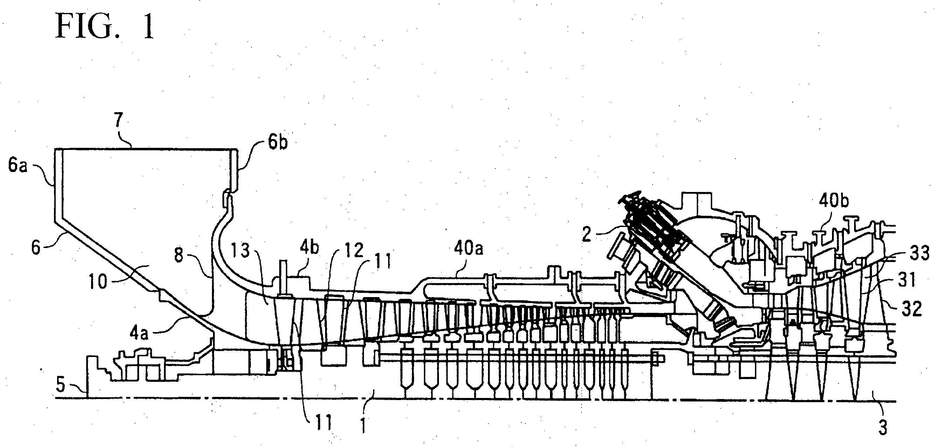

The basic constitution of a gas turbine provided with an intake duct of the present invention shall be simply described with reference to FIG. 1. FIG. 1 is an outline sectional view that shows the constitution of the gas turbine.

As shown in FIG. 1, the gas turbine is provided with a compressor 1 that compresses air, a combustor 2 that performs a combustion operation with air that is compressed by the compressor 1 and a fuel being supplied, and a turbine 3 that is rotationally driven by combustion gas from the combustor 2. The compressor 1 and the turbine 3 are respectively covered by the cabins 40a, 40b, and a plurality of the combustors 2 are provided at equal spacings on the periphery of a rotor shaft 5 that makes the compressor 1 and the turbine 3 a single axis.

Moreover, an intake duct 6 of a single suction structure that is provided with a suction port 7 for drawing in air, to be supplied to the compressor 1 from the open air, in a direction perpendicular to the rotor shaft 5 (the radial direction of the rotor shaft 5) is arranged in the upstream of the compressor 1. The cabin 40a is constituted by an inner casing 4a and an outer casing 4b that are respectively formed on the inner side and the outer side with respect to the radial direction of the rotor shaft 5. Also, this intake duct 6 is constituted by an intake casing (first casing) 6a and an intake casing (second casing) 6b that are respectively connected to the inner casing 4a and an outer casing 4b.

That is, the intake duct 6 has a structure that is provided with an annular space 10 by the intake casings 6a, 6b of a concentric annular shape, and the open air is supplied from the suction port 7 that is open in the radial direction of the rotor shaft 5 in the space that is formed by the intake casings 6a, 6b. Note that as shown in FIG. 1, each of the following embodiments shall be described assuming the suction port 7 is provided at the upside, but the suction port 7 is not limited to the upside, but may be open in any radial direction of the rotor shaft 5. Similarly, the cabin 40a has a double pipe structure by the inner casing 4a and the outer casing 4b of concentric cylinder shape, and a compressed air flow path 13 is constituted in the space between the inner casing 4a and the outer casing 4b.

Also, a strut 8 for supporting the inner casing 4a and the outer casing 4b is provided at an inlet side of the compressor 1. That is, the strut 8 is provided at a stage prior to a stator blade 11 of the first stage that is an IGV (inlet guide vane) of the compressor 1. Note that the first stage stator blade 11 that serves as the IGV is a movable blade that can be opened and closed, and it is possible to set a flow rate that is supplied to the compressor 1 from the intake duct 6 with this first stage stator blade 11.

The stator blade 11 that is fixed to the outer casing 4b and the rotor blade 12 that is fixed to the rotor shaft 5 are alternately arranged in the compressed air flow path 13, and air from open air that is drawn in by the intake duct 6 is supplied. Also, a stator blade 31 that is fixed to the turbine cabin 40b and a rotor blade 32 that is fixed to the rotor shaft 5 are alternately arranged in a turbine flow path 33, and combustion gas that is produced by the combustor 2 is supplied.

In this gas turbine, the air that is compressed by the compressor 1 is supplied to the combustor 2. Then, the compressed air that is supplied to the combustor 2 is used in the combustion of the fuel that is supplied to the combustor 2. A portion of the compressed air is used for cooling of the stator blade 31 that is fixed to the turbine cabin 40b and the rotor blade 32 that is fixed to the rotor shaft 5, which are exposed to high temperature by the combustion gas from the combustor 2.

Then, the combustion gas that is generated by the combustion operation in the combustor 2 is supplied to the turbine 3, and the turbine 3 is rotationally driven by the combustion gas alternately passing the rotor blade 32 and the stator blade 31. The compressor 1 is thus rotationally driven by the rotational driving of the turbine 3 being transmitted to the compressor 1 via the rotor shaft 5. Thereby, in the compressor 1, by the rotation of the rotor blade 12 that is fixed to the rotor shaft 5, air that flows in the space that is formed by the stator blade 11 that is fixed to the cabin 40a and the rotor blade 12 is compressed.

Embodiments of the compressor 1 of the gas turbine 3 constituted in this way shall be described below.

### (First Embodiment)

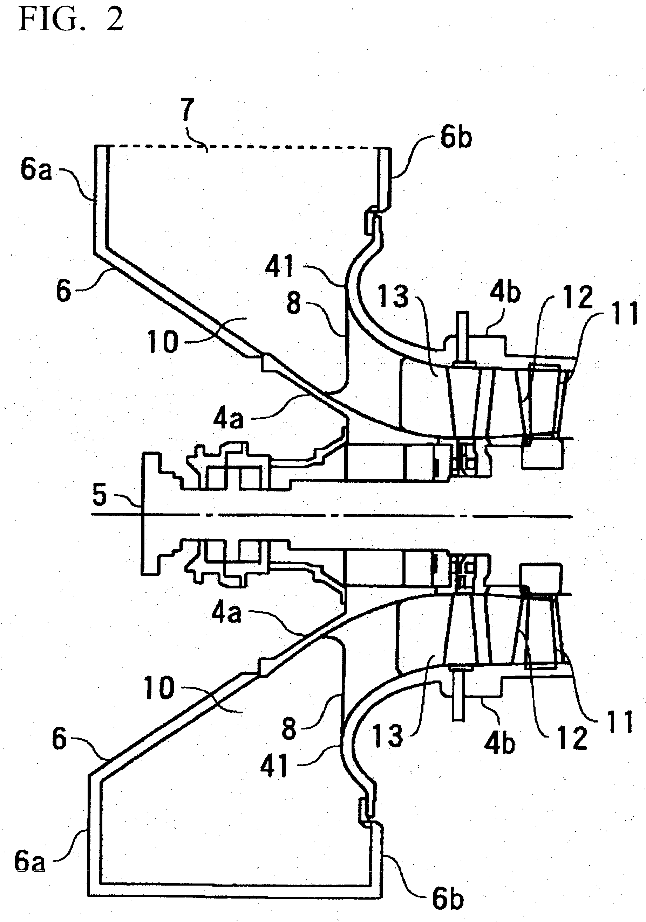

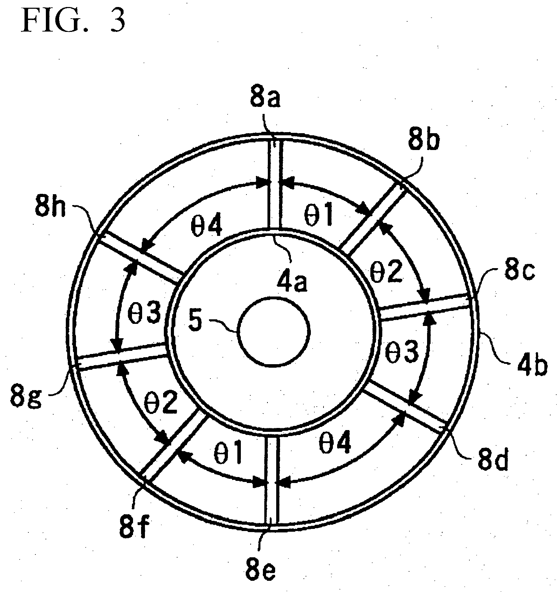

The first embodiment of the compressor of the present invention shall be described with reference to the drawings. FIG. 2 is an outline sectional view that shows the constitution around the intake duct of the compressor of the present embodiment. FIG. 3 is a drawing that shows the arrangement relationship of the struts, which are used in the compressor of the present invention, in the circumferential direction of the rotor shaft.

As shown in FIG. 2, the inner casing 4a extends until the distal end of the rotor shaft 5, with the distal end thereof having a bent structure toward the peripheral direction, and the annular intake casing 6a is connected to this bent distal end. Also, the outer casing 4b is curved closer to the side of the compressor 1 than the inner casing 4a, with a curved portion 41 having a bell mouth structure that is swollen toward the inside wall of the intake casing 6a. The respective side surfaces of the intake casings 6a, 6b are connected, and the intake duct 6 is formed provided with the annular space 10 by the intake casings 6a, 6b, the inner casing 4a, and the outer casing 4b. The suction port 7 for drawing in open air from the upside is formed by forming the upside of this intake duct 6 open.

Furthermore, the struts 8 that are provided in a radial pattern centered on the rotor shaft 5 are connected to the inner side of the curved portion 41 of the outer casing 4b as well as the inner casing 4a. With these struts 8, the inner casing 4a and the outer casing 4b are supported at the inlet of the compressor 1. Also, the respective connection positions of the struts 8 with the inner casing 4a and the outer casing 4b are mostly in agreement in the axial direction of the rotor shaft 5.

When constituted in this manner, FIG. 3 shows the arrangement relationship with respect to the circumferential direction of the rotor shaft 5 for the struts 8 that are installed in a radial pattern with respect to the rotor shaft 5. That is, when eight struts 8a to 8h are arranged in the circumferential direction of the rotor shaft 5, the difference between the minimum value and the maximum value of the angle of the spacings between adjacent struts among the struts 8a to 8h is at least 120 degrees/8 = 15 degrees. Note that in the case of n struts 8, the difference between the minimum value and the maximum value of the angle of the spacings between the adjacent struts 8 is set so as to be at least 120 degrees/n.

In the case of the eight struts 8a to 8h being arranged as shown in FIG. 3, the spacing of struts 8a, 8b and struts 8e, 8f is angle θ1, the spacing of struts 8b, 8c and struts 8f, 8g is angle θ2, the spacing of struts 8c, 8d and struts 8g, 8h is angle θ3, and the spacing of struts 8d, 8e and struts 8h, 8a is angle θ4. At this time, for example, as shown in FIG. 3, the angles θ1 to θ3 are 40 degrees, and the angle θ4 is 60 degrees, so that the difference between the value of angle θ min that is the minimum value in angles θ1 to 04 and the value of angle θ max the maximum value is set to at least 15 degrees.

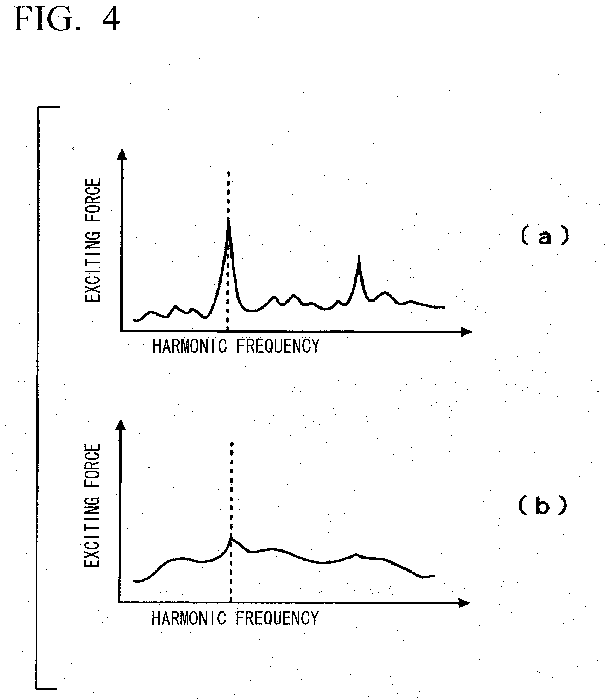

In this way, by setting the difference between the minimum value and the maximum value of the angle of the spacings of the struts 8 to be at least 120 degrees/n, it is possible to make the distribution of the frequency component of total pressure in downstream of the struts 8 in the compressor flow path 13 have the distribution characteristics shown in (b) of FIG. 4. That is, in the distribution characteristics as shown in (a) of FIG. 4 in which the angles of the spacings of the struts 8 are all made equal, since there is a harmonic component that corresponds to the number of struts, the exciting force in the frequency that becomes the harmonic component becomes outstandingly large. In contrast, in the present embodiment, as shown in (b) of FIG. 4, since the struts 8 are arranged at unequal spacings in the circumferential direction, by distributing the exciting force at each frequency, it is possible to reduce the harmonic component. Note that FIG. 4 expressed by the exciting force the frequency distribution of the total pressure of the air that flows into the downstream of the struts 8, that is, shows the frequency distribution of variance amplitudes of the total pressure of the flow downstream of the struts and upstream of the IGV.

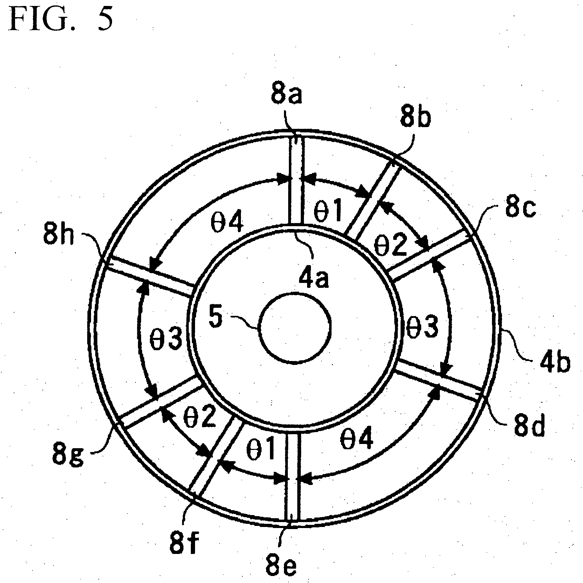

In this way, in the present embodiment, as shown in the frequency component distribution of the total pressure of the air that flows into the downstream of the struts 8 in (b) of FIG. 4, due to being capable of reducing the harmonic component, it is possible to increase the design degree of freedom with respect to the installation position of the stator blade 11 and the rotor blade 12 of the compressor 1. Note that regarding the positional relation in the circumferential direction of the struts 8, FIG. 3 is only one example, and for the eight struts 8a to 8h, the angle of adjacent spacing of one portion may be at least 15 degrees (= 120/8 degrees), in which angles θ1, 62 are 30 degrees, angle 63 is 50 degrees, and angle 64 is 70 degrees as shown in FIG 5.

Furthermore, regarding the number of the struts 8, it is not limited to eight, and so long as a number is provided that is capable of sufficiently supporting the inner casing 4a and the outer casing 4b, it may be more than or less than eight. Note that since a pressure drop occurs due to the wake generated by the struts 8 as described above, it is preferable for the number of the struts 8 to be as few as possible in order to reduce the pressure drop of the air that is flowed into the compressor 1.

### (Second Embodiment)

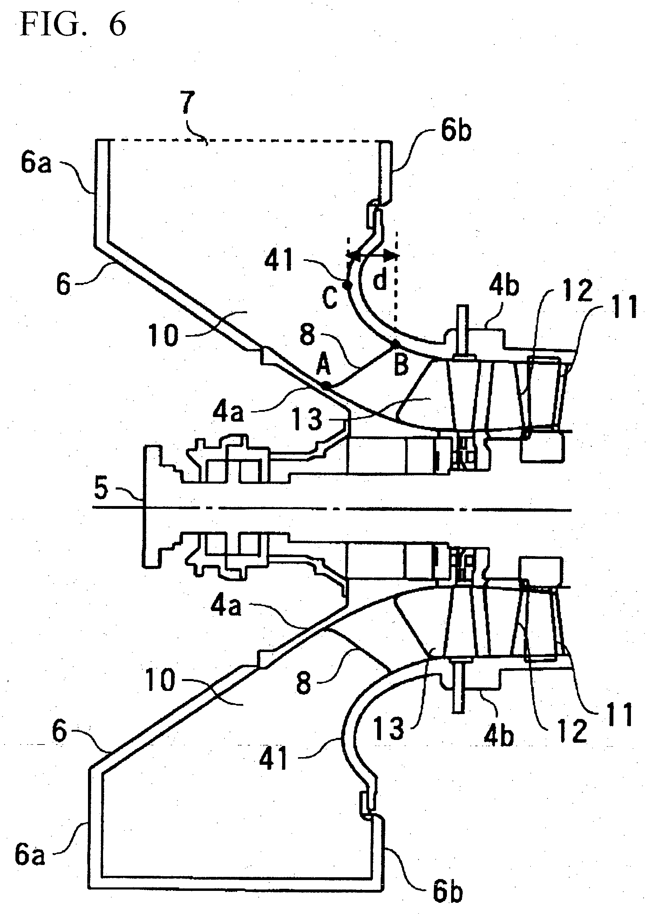

The second embodiment of the compressor of the present invention shall be described with reference to the appended drawings. FIG. 6 is an outline sectional view that shows the constitution around the intake duct of the compressor of the present embodiment. Those portions that are the same as the constitution of FIG 2 are denoted by the same reference numerals, and so a detailed description thereof shall be omitted.

In the present embodiment, as shown in FIG 6, in contrast to the constitution shown in FIG 2, the strut 8 has a shape that, heading toward the periphery of the rotor shaft 5, slopes to the downstream in the axial direction of the rotor shaft 5 so that the connection position A of the strut 8 at the inner casing 4a is further upstream compared to the connection position B at the outer casing 4b. By constituting the strut 8 in this way, a distance d from the distal end of the curved portion 41 of the outer casing 4b to the connection position B of the strut 8 at the outer casing 4b becomes longer compared to the case of the constitution of FIG 2.

Now, due to the curved portion 41 of the outer casing 4b having a bell mouth shape, air that flows from the periphery along the inner wall of the intake casing 6b of the compressor 1 side of the intake duct 6 flows until the entrance of the air flow path 13 where the strut 8 is installed without the flow coming to a rest. For that reason, a difference in the flow velocity of air that flows in occurs between the inner casing 4a side and the outer casing 4b side at the entrance of the air flow path 13.

However, by making the shape of the strut 8 slope toward the trailing edge (the downstream in the axial direction of the rotor shaft 5) as in FIG. 6, it is possible to lengthen the distance from the entrance of the air flow path 13 to the strut 8, heading from the inner casing 4a side to the outer casing 4b. Therefore, it is possible to put the flow velocity distribution of air at the leading edge of the strut 8 (the edge at the upstream in the axial direction of the rotor shaft 5) in an approximately equivalent state. Thereby, it is possible to make the flow of air that flows into the strut 8 a more uniform flow, and it is possible to reduce pressure loss at the side of the connection position with the outer casing 4b (the tip side).

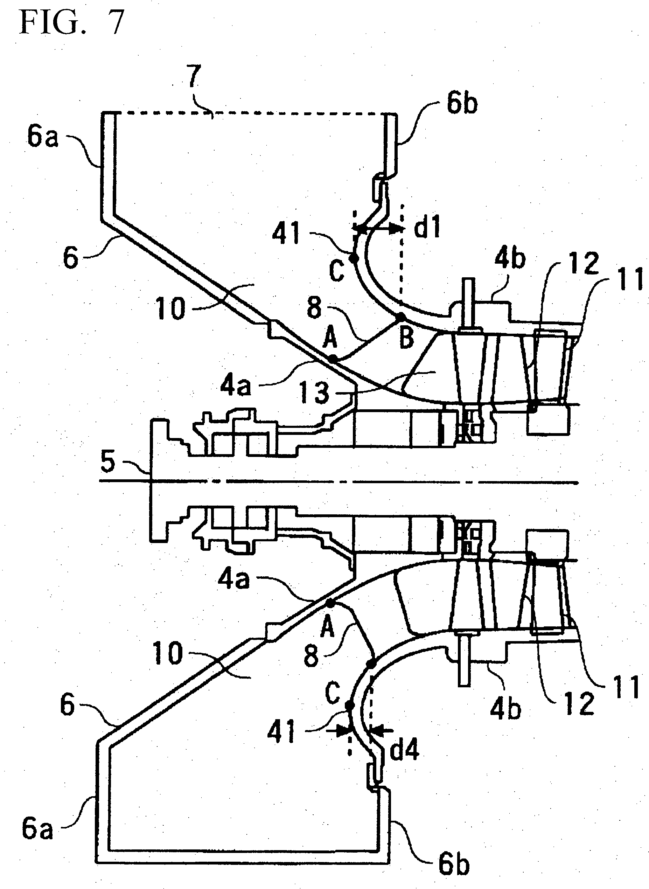

Note that in FIG. 6, in the plurality of the struts 8 arranged in the circumferential direction of the rotor shaft 5, the connection position B with the outer casing 4b is positioned further to the downstream compared to the connection position A with the inner casing 4a. Accordingly, in the plurality of the struts 8, the distance d from the distal end C of the curved portion 41 of the outer casing 4b to the connection position B is the same. However, for a strut 8a positioned near the suction port 7 and a strut 8d positioned far from the suction port 7, when comparing distances d1, d4 from the distal end C of the curved portion 41 of the outer casing 4b to the connection position B with the outer casing 4b, as shown in FIG. 7, the distance d1 may be made longer than the distance d4.

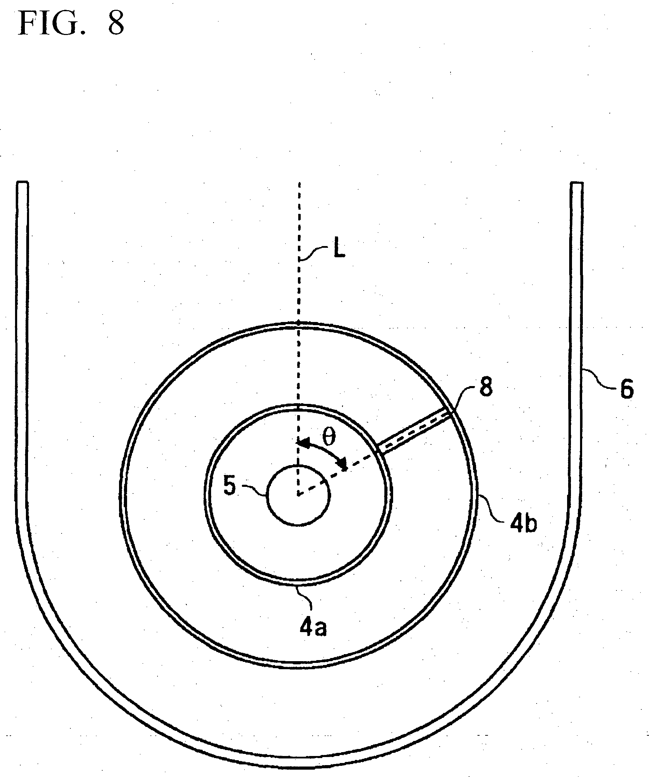

Furthermore, as shown in FIG. 7, when changing the distance d from the distal end C of the curved portion 41 of the outer casing 4b to the connection position B with the outer casing 4b depending on the position in the circumferential direction of the strut 8, the distance d is changed in accordance with an intersection angle θ (0 degrees = θ = 180 degrees, refer to FIG 8) with a straight line L that connects the center of the suction port 7 and the center of the rotor shaft 5, the distance d may decrease the further it moves away from the suction port 7 due to the increase in the intersection angle θ.

Also, regarding the positional relation in the circumferential direction of the struts 8, by making the spacings of adjacent struts 8 unequal as in the first embodiment (for example, refer to FIG 3 and FIG 5), the harmonic component in the frequency component distribution of the total pressure of the air that flows in to the downstream of the strut 8 may be reduced, and the degree of freedom in the blade design of the compressor 1 may be increased.

### (Third Embodiment)

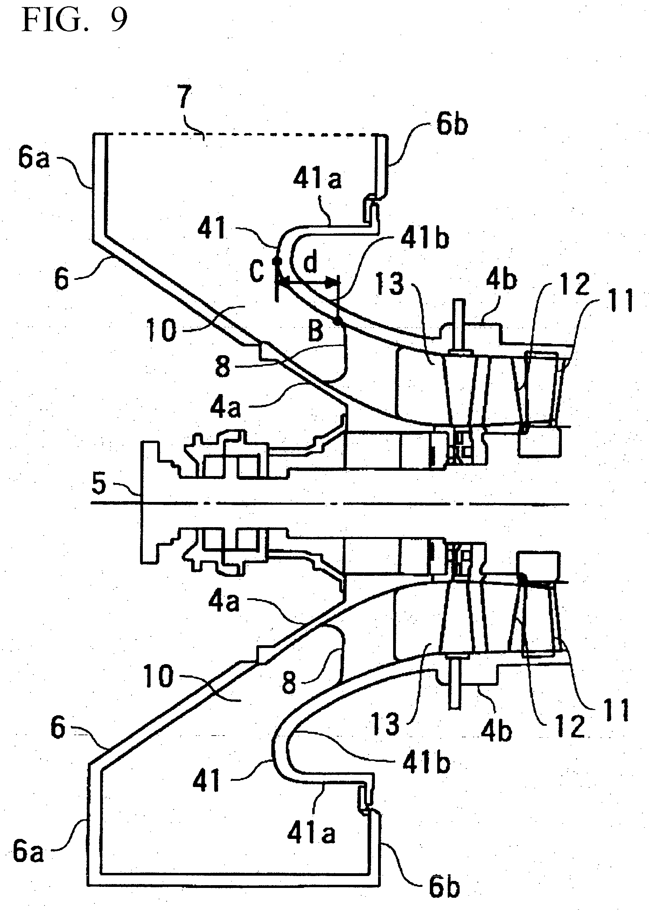

The third embodiment of the compressor of the present invention shall be described with reference to the appended drawings. FIG 9 is an outline sectional view that shows the constitution around the intake duct of the compressor of the present embodiment. Those portions that are the same as the constitution of FIG 2 are denoted by the same reference numerals, and so a detailed description thereof shall be omitted.

In the present embodiment, in contrast to the constitution shown in FIG. 2, as shown in FIG. 9, the curved portion 41 of the outer casing 4b has a constitution of projecting further to the side of the intake casing 6a. Accordingly, in the periphery side of the curved portion 41, a flat portion 41a is formed that becomes a surface that is approximately parallel with the peripheral surface of the rotor shaft 5 (a surface approximately perpendicular to the intake casing 6b). Thus a cross section of the flat portion 41 a from the distal end of the intake casing 6a side toward the inner side thereof forms a curved surface portion 41b having a U-shape in which the distal end thereof faces the side of the intake casing 6a.

In this way, by providing the flat portion 41 a in the curved portion 41 that is connected with the intake casing 6b of the outer casing 4b, it is possible to stop the flow of air that flows in from the periphery side along the inner wall of the intake casing 6b. At this time, since it is possible to cause the flow of this air to turn in the circumferential direction by this flat portion 41 a, it is possible to accelerate the flow of air that flows along the curved surface portion 41 b from the flat portion 41 a of the curved portion 41 from nearly the same condition in the circumferential direction. Thereby, it is possible to put the distribution of the flow of air that flows into the air flow path 13 in an approximately equivalent state with respect to the circumferential direction of the rotor shaft 5 and moderate drifts.

Also, due to the constitution that provides the flat portion 41 a in the curved portion 41 so as to project toward the intake casing 6a, it is possible to lengthen the distance d from the distal end C of the curved portion 41 to the connection position B of the strut 8 with the outer casing 4b. Thereby, similar to the second embodiment, it is possible to make the flow of air that flows into the strut 8 a more uniform flow, and it is possible to reduce pressure loss at the side of the connection position with the outer casing 4b (the tip side).

Therefore, in the present embodiment, the flat portion 41a is provided in the curved portion 41 so as to project into the intake duct 6. Since it is possible to put the distribution of the flow of air that flows into the air flow path 13 into a state of being approximately even with respect to the radial direction and circumferential direction of the rotor shaft 5 and reduce drifts, it is possible to suppress a drop in efficiency of the compressor.

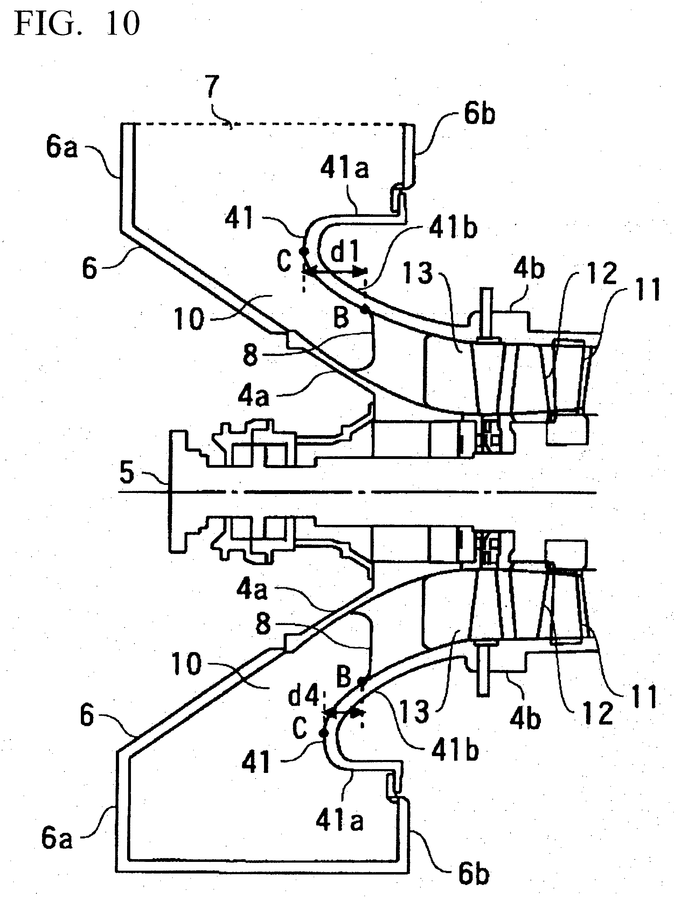

Note that in FIG. 9, the curved portion 41 of the outer casing 4b is made to have the same cross-sectional shape with respect to the circumferential direction of the rotor shaft 5. But as shown in FIG. 10, the length in the axial direction of the flat portion 41a at a position near the suction port 7 may be made to become longer than the length in the axial direction of the flat portion 41a at a portion far from the suction port 7. By doing so, for a strut 8a positioned near the suction port 7 and a strut 8d positioned far from the suction port 7, when comparing distances d1, d4 from the distal end C of the curved portion 41 of the outer casing 4b to the connection position B with the outer casing 4b, as shown in FIG 10, the distance d1 becomes longer than the distance d4. Note that the position that is far from the suction port 7 may be made into the same bell mouth shape as in FIG. 2 without the flat portion 41 a being constituted in the curved portion 41.

Moreover, when producing the constitution as shown in FIG. 10, when changing the distance d from the distal end C of the curved portion 41 of the outer casing 4b to the connection position B with the outer casing 4b depending on the position in the circumferential direction of the curved portion 41, it may be arranged in the following manner. The distance d is changed in accordance with the intersection angle θ (0 degrees = θ = 180 degrees, refer to FIG. 8) with a straight line L that connects the center of the suction port 7 and the center of the rotor shaft 5, and the distance d may increase the further it moves away from the suction port 7 due to the increase in the intersection angle θ.

Note that in the present embodiment, regarding the positional relation in the circumferential direction of the struts 8, by making the spacings of adjacent struts 8 unequal as in the first embodiment (for example, refer to FIG. 3 and FIG. 5), the harmonic component in the frequency component distribution of the total pressures of the air that flows in to the downstream of the strut 8 may be reduced, and the degree of freedom in the blade design of the compressor 1 may be increased. Also, as in the second embodiment, the flow velocity distribution of air at the leading edge of the strut 8 may be put in an approximately equivalent state by the connection position B of the strut 8 with the outer casing 4b being positioned further downstream compared to the connection position A thereof with the inner casing 4a.

### [INDUSTRIAL APPLICABILITY]

The compressor of the present invention can be applied to a compressor having a single suction structure provided with an annular space centered on a rotor shaft and with a suction port opened at one side. Also, it may be applied to a compressor that is constituted to have the same axis as a gas turbine that is rotationally driven by combustion gas.

## Claims

1. A compressor (1) comprising:
an inner casing (4a) arranged so as to cover a rotor shaft (5);
an outer casing (4b) arranged so as to cover the inner casing (4a) and forming a fluid flow path (13) around the rotor shaft (5); and
a stator blade (11) of a first stage of the compressor (1);
**characterized in that**
the compressor (1) comprises a plurality of struts (8) mounted in the entrance of the fluid flow path (13) at a stage prior to the stator blade (11) of the first stage of the compressor (1) and between the inner casing (4a) and the outer casing (4b), for supporting the inner casing (4a) and the outer casing (4b),
wherein the plurality of struts (8) are arranged in a radial pattern centered on the rotor shaft (5), and the spacings between at least some of the adjacent struts (8) in the circumferential direction of the rotor shaft (5) are unequal.

2. The compressor (1) according to claim 1, wherein n struts (8) are arranged in the circumferential direction of the rotor shaft (5), wherein n is an integer of 2 or more; and
the difference between the maximum value and the minimum value of the angle (θ) expressing the spacings of the adjacent struts (8) when centered on the rotor shaft (5) is at least 120 degrees/n.

3. The compressor (1) according to claim 1 or claim 2, further comprising:
a first casing (6a) that is connected to the inner casing (4a) at the entrance end of the fluid flow path (13); and
a second casing (6b) that is connected to the outer casing (4b) at the entrance end of the fluid flow path (13), wherein a curved portion (41) that curves so as to project toward the first casing (6a) is formed at the connection portion of the outer casing (4b) with the second casing (6b).

4. The compressor (1) according to claim 3, wherein the curved portion (41) further comprises:
a flat portion (41a) that is adjacent to the second casing (6b) and consists of a surface that is approximately parallel with the peripheral surface of the rotor shaft (5); and
a curved surface (41b) that smoothly curves inward in the radial direction of the rotor shaft (5) from the distal end of the flat portion (41a), wherein
a cross-section of the curved portion (41) forms an approximate U-shape that projects toward the first casing (6a).

5. The compressor (1) according to claim 3 or claim 4, wherein the connection portions of the struts (8) with the outer casing (4b) are positioned further to the downstream in the axial direction of the rotor shaft (5) than the distal end of the curved portion (41).

6. The compressor (1) according to claim 4 or claim 5, wherein, in the flat portion (41a) that is formed in an annular shape along the circumferential direction of the rotor shaft (5), the length in the axial direction of a first portion adjacent to an open air suction port (7) that is formed at the distal end of the first casing (6a) and the second casing (6b) is longer than the length in the axial direction of a second portion that is positioned further from the suction port (7) than the first portion.

7. The compressor (1) according to any one of claims 3 to 6, wherein, in the curved portion (41) that is formed in an annular shape along the circumferential direction of the rotor shaft (5), the distal end of a/the first portion that is adjacent to an/the open air suction port (7) that is formed at the distal end of the first casing (6a) and the second casing (6b) projects further toward the first casing (6a) than the distal end of a/the second portion that is positioned further from the suction port (7) than the first portion.

8. The compressor (1) according to any one of claims 1 to 7, wherein the connection portions of the struts (8) with the outer casing (4b) are positioned further downstream in the axial direction of the rotor shaft (5) than the connection portions of the struts (8) with the inner casing (4a).

9. The compressor (1) according to claim 8, wherein the distance in the axial direction of the connection portion between the struts (8) with the outer casing (4b) and the distance in the axial direction of the connection portion between the struts (8) with the inner casing (4a) are longer the closer the struts (8) are to a/the open air suction port (7) that is formed at the distal end of a/the first casing (6a) and a/the second casing (6b).

10. The compressor (1) according to any one of claims 1 to 9, wherein an intake duct (6) of a single suction structure that is provided with a suction port (7) for drawing in air, to be supplied to the compressor (1) from the open air, in a direction perpendicular to the rotor shaft (5) is arranged in the upstream of the compressor (1).

11. A gas turbine that is equipped with a compressor (1) according to any one of claims 1 to 10.

## Patentansprüche

1. Ein Kompressor (1) mit:
einem Innengehäuse (4a), das angeordnet ist, um eine Rotorwelle (5) abzudecken,
einem Außengehäuse (4b), das angeordnet ist, um das Innengehäuse (4a) abzudecken und das einen Fluidströmungsweg (13) um die Rotorwelle (5) herum bildet, und
einer Statorschaufel (11) einer ersten Stufe des Kompressors (1),
**dadurch gekennzeichnet, dass**
der Kompressor (1) eine Vielzahl von Streben (8) aufweist, die in dem Einlass des Fluidströmungswegs (13) an einer Stufe vor der Statorschaufel (11) der ersten Stufe des Kompressors (1) und zwischen dem Innengehäuse (4a) und dem Außengehäuse (4b) angebracht ist, um das Innengehäuse (4a) und das Außengehäuse (4b) zu tragen,
wobei die Vielzahl von Streben (8) in einem auf die Rotorwelle (5) zentrierten radialen Muster angeordnet sind, und die Abstände zwischen zumindest einigen der benachbarten Streben (8) in der Umfangsrichtung der Rotorwelle (5) ungleichmäßig sind.

2. Der Kompressor (1) gemäß Anspruch 1, wobei n Streben (8) in der Umfangsrichtung der Rotorwelle (5) angeordnet sind, wobei n eine ganze Zahl von 2 oder größer ist, und
die Differenz zwischen dem Maximalwert und dem Minimalwert des Winkels (θ), welcher die Zwischenräume der benachbarten Streben (8) ausdrückt, wenn diese auf die Rotorwelle (5) zentriert sind, zumindest 120 Grad/n beträgt.

3. Der Kompressor (1) gemäß Anspruch 1 oder Anspruch 2, ferner mit:
einem ersten Gehäuse (6a), das mit dem Innengehäuse (4a) an dem Einlassende des Fluidströmungswegs (13) verbunden ist, und
einem zweiten Gehäuse (6b), das mit dem Außengehäuse (4b) an dem Einlassende des Fluidströmungswegs (13) verbunden ist, wobei ein gekrümmter Abschnitt (41), der sich so krümmt, dass er zu dem ersten Gehäuse (6a) vorsteht, an dem Verbindungsabschnitt des Außengehäuses (4b) mit dem zweiten Gehäuse (6b) ausgebildet ist.

4. Der Kompressor (1) gemäß Anspruch 3, wobei der gekrümmte Abschnitt (41) ferner aufweist:
einen flachen Abschnitt (41a), der dem zweiten Gehäuse (6b) benachbart ist und aus einer Oberfläche besteht, die etwa parallel zu der Umfangsfläche der Rotorwelle (5) ist, und
eine gekrümmte Oberfläche (41b), die sich sanft in der Radialrichtung der Rotorwelle (5) von dem distalen Ende des flachen Abschnitts (41a) nach innen krümmt, wobei
ein Querschnitt des gekrümmten Abschnitts (41) etwa eine U-Form bildet, die zu dem ersten Gehäuse (6a) vorsteht.

5. Der Kompressor (1) gemäß Anspruch 3 oder Anspruch 4, wobei die Verbindungsabschnitte der Streben (8) mit dem Außengehäuse (4b) weiter stromabwärts in der Axialrichtung der Rotorwelle (5) positioniert sind als das distale Ende des gekrümmten Abschnitts (41).

6. Der Kompressor gemäß Anspruch 4 oder Anspruch 5, wobei, in dem flachen Abschnitt (41a), welcher in einer Ringform entlang der Umfangsrichtung der Rotorwelle (5) ausgebildet ist, die Länge der Axialrichtung eines ersten Abschnitts angrenzend an einen Offenluftansauganschluss (7), welcher an dem distalen Ende des ersten Gehäuses (6a) und des zweiten Gehäuses (6b) ausgebildet ist, länger ist als die Länge eines zweiten Abschnitts in der Axialrichtung, welcher weiter von dem Ansauganschluss (7) weg positioniert ist als der erste Abschnitt.

7. Der Kompressor (1) gemäß einem der Ansprüche 3 bis 6, wobei, in dem gekrümmten Abschnitt (41), welcher in einer Ringform entlang der Umfangsrichtung der Rotorwelle (5) ausgebildet ist, das distale Ende eines/des ersten Abschnitts, der an einen/den Offenluftansauganschluss (7) angrenzt, welcher an dem distalen Ende des ersten Gehäuses (6a) und des zweiten Gehäuses (6b) ausgebildet ist, weiter zu dem ersten Gehäuse (6a) vorsteht als das distale Ende eines/des zweiten Abschnitts, welcher weiter von dem Ansauganschluss (7) weg positioniert ist als der erste Abschnitt.

8. Der Kompressor (1) gemäß einem der Ansprüche 1 bis 7, wobei die Verbindungsabschnitte der Streben (8) mit dem Außengehäuse (4b) weiter stromabwärts in der axialen Richtung der Rotorwelle (5) positioniert sind als die Verbindungsabschnitte der Streben (8) mit dem Innengehäuse (4a).

9. Der Kompressor (1) gemäß Anspruch 8, wobei die Distanz des Verbindungsabschnitts in der Axialrichtung zwischen den Streben (8) mit dem Außengehäuse (4b) und der Distanz des Verbindungsabschnitts in der Axialrichtung zwischen den Streben (8) mit dem Innengehäuse (4a) länger ist, je näher die Streben (8) zu einem/dem Offenluftansauganschluss (7) sind, welcher an dem distalen Ende eines/des ersten Gehäuses (6a) und eines/des zweiten Gehäuses (6b) ausgebildet ist.

10. Der Kompressor (1) gemäß einem der Ansprüche 1 bis 9, wobei ein Einlasskanal (6) einer Einzelansaugstruktur, welche mit einem Ansauganschluss (7) versehen ist, zum Ansaugen von Luft, die dem Kompressor (1) von der offenen Luft zuzuführen ist, in einer Richtung senkrecht zu der Rotorwelle (5), stromauf des Kompressors (1) angeordnet ist.

11. Eine Gasturbine, die mit einem Kompressor (1) gemäß einem der Ansprüche 1 bis 10 ausgestattet ist.

## Revendications

1. Compresseur (1) comprenant :
un carter (4a) intérieur disposé de manière à recouvrir un arbre (5) de rotor ;
un carter (4b) extérieur disposé de manière à recouvrir le carter (4a) intérieur et à former un trajet (13) d'écoulement de fluide autour de l'arbre (5) du rotor et
une aube (11) statorique d'un premier étage du compresseur (1) ;
**caractérisé en ce que**
le compresseur (1) comprend une pluralité d'entretoises (8) montées dans l'entrée du trajet (13) d'écoulement de fluide à un étage avant l'aube (11) statorique du premier étage du compresseur (1) et entre le carter (4a) intérieur et le carter (4b) extérieur, pour supporter le carter (4a) intérieur et le carter (4b) extérieur,
dans lequel la pluralité d'entretoises (8) est disposée suivant une configuration radiale centrée sur l'arbre (5) du rotor et les intervalles entre au moins certaines des entretoises (8) voisines dans la direction circonférentielle de l'arbre (58) du rotor sont inégaux.

2. Compresseur suivant la revendication 1, dans lequel n entretoises sont disposées dans la direction circonférentielle de l'arbre (5) du rotor, n étant un nombre entier supérieur ou égal à 2 et
la différence entre la valeur maximum et la valeur minimum de l'angle (θ) exprimant les intervalles des entretoises (8) voisines ramené au centre de l'arbre (5) du rotor est d'au moins 120 degrés/n.

3. Compresseur (1) suivant la revendication 1 ou la revendication 2, comprenant, en outre :
un premier carter (6a), qui est relié au carter (4a) intérieur à l'extrémité d'entrée du trajet (13) d'écoulement de fluide et
un deuxième carter (6b), qui est relié au carter (4b) extérieur à l'extrémité d'entrée du trajet (13) d'écoulement de fluide, dans lequel une partie (41) incurvée, qui s'incurve de manière à faire saillie vers le premier carter (6a), est formée à la partie de liaison du carter (4b) extérieur au deuxième carter (6b).

4. Compresseur (1) suivant la revendication 3, dans lequel la partie (41) incurvée comprend, en outre :
une partie (41a) plane, qui est voisine du deuxième carter (6b) et qui consiste en une surface qui est à peu près parallèle à la surface périphérique de l'arbre (5) du rotor et
une surface (41b) incurvée, qui s'incurve doucement vers l'intérieur dans la direction radiale de l'arbre (5) du rotor à partir de l'extrémité distale de la partie (41a) plane, dans lequel
une section transversale de la partie (41) incurvée forme à peu près un U, qui fait saillie vers le premier carter (6a).

5. Compresseur (1) suivant la revendication 3 ou la revendication 4, dans lequel les parties de liaison des entretoises (8) au carter (4b) extérieur sont placées plus vers l'aval dans la direction axiale de l'arbre (5) du rotor que l'extrémité distale de la partie (41) incurvée.

6. Compresseur (1) suivant la revendication 4 ou la revendication 5, dans lequel, dans la partie (41a) plane, qui est formée sous une forme annulaire dans la direction circonférentielle de l'arbre (5) du rotor, la longueur dans la direction axiale d'une première partie voisine d'un orifice (7) ouvert d'aspiration d'air, qui est formée à l'extrémité distale du premier carter (6a) et du deuxième carter (6b), est plus grande que la longueur dans la direction axiale d'une deuxième partie, qui est placée plus loin de l'orifice (7) d'aspiration que ne l'est la première partie.

7. Compresseur (1) suivant l'une quelconque des revendications 3 à 6, dans lequel, dans la partie (41) incurvée, qui est formée sous une forme annulaire dans la direction circonférentielle de l'arbre (5) du rotor, l'extrémité distale d'une/de la première partie, qui est voisine d'un/de l'orifice (7) ouvert d'aspiration d'air, qui est formé à l'extrémité distale du premier carter (6a) et du deuxième carter (6b), fait saillie davantage vers le premier carter (6a) que l'extrémité distale d'une/de la deuxième partie, qui est placée plus loin de l'orifice (7) d'aspiration que ne l'est la première partie.

8. Compresseur (1) suivant l'une quelconque des revendications 1 à 7, dans lequel les parties de liaison des entretoises (8) au carter (4b) extérieur sont placées plus en aval dans la direction axiale de l'arbre (5) du rotor que les parties de liaison des entretoises (8) au carter (4a) intérieur.

9. Compresseur (1) suivant la revendication 8, dans lequel les entretoises (8) sont d'autant plus proches d'un/de l'orifice (7) d'aspiration d'air atmosphérique, qui est formé à l'extrémité distale d'un/ du premier carter (6a) et d'un/du deuxième carter (6b), que la distance dans la direction axiale de la partie de liaison des entretoises (8) au carter (4b) extérieur et que la distance dans la direction axiale de la partie de liaison des entretoises (8) au carter (4a) intérieur sont plus grandes.

10. Compresseur (1) suivant l'une quelconque des revendications 1 à 9, dans lequel un conduit (6) d'admission d'une structure unique d'aspiration qui est pourvu d'un orifice (7) d'aspiration pour aspirer de l'air, à envoyer au compresseur (1) à partir de l'air atmosphérique, dans une direction perpendiculaire à l'arbre (5) du rotor, est disposé en amont au compresseur (1).

11. Turbine à gaz équipée d'un compresseur (1) suivant l'une quelconque des revendications 1 à 10.
